# EUROPEAN PATENT APPLICATION

(11) **EP 4 102 674 A1**
(43) Date of publication of application: **14.12.2022**
(21) Application number: 21178507.6
(22) Date of filing: 09.06.2021
(51) Int. Cl.: H02J 7/00, H02J 7/35

(54) **A PERIPHERAL FOR AN ALARM SYSTEM INSTALLATION AND A COVER FOR A BATTERY HOUSING OF AN ELECTRONIC DEVICE**

(71) Applicant: Verisure Sàrl, 1290 Versoix (CH)
(72) Inventor: Hackett, Nick, 1290 Versoix, Geneva (CH); Piedbois, Julien, 1290 Versoix, Geneva (CH)
(74) Representative: Prinz & Partner mbB

(57) **Abstract**

The invention relates to a cover for a battery housing of an electronic device, the cover being configured for releasable attachment to the device to close the battery housing to enclose a rechargeable battery pack within the housing, the cover comprising: an inner surface/side which, in use faces the battery pack within the housing; an outer surface; a photovoltaic arrangement on the outer surface; a charging interface on the inner surface to couple with a charging input of the rechargeable battery pack; the photovoltaic arrangement being electrically coupled to the charging interface, so that in use the photovoltaic arrangement is able to supply electrical current to a rechargeable battery pack within the battery housing.

The invention also relates to an alarm peripheral for an alarm system installation, the peripheral comprising a battery housing adapted to receive a rechargeable battery pack, the peripheral comprising a first electrical interface adapted to connect with, and draw current from a first corresponding interface of the rechargeable battery pack when installed in the peripheral, including such a cover.

## Description

The invention relates to a cover for a battery housing of an electronic device, and to peripherals including such a cover and which are used in an alarm system installation.

The peripherals may be part of an alarm installation which is used for protecting premises such as a building and its grounds. The term "building" here refers to small businesses and homes. These can be offices, houses or flats within a house or apartment block.

An alarm system installation typically comprises a central unit and one or more peripherals. The central unit is typically mains-powered and serves for external communication, e.g. for sending an alarm call to an external operation centre. The peripherals communicate with the central unit and can, amongst other things, be sensors, cameras or communication interfaces via which a user can communicate with the central unit, e.g. to arm or disarm the alarm system installation. The peripherals and the central unit may communicate using wired links, but in many situations wireless communication is preferred.

Battery power is often used in preference to other types of power supply, such as a networked "mains" power supply or an intermittent or unreliable one such as solar, wave or wind, where continuity of supply is required together with a freedom to locate the device being powered without the constraint of having a wired connection. For example, in security monitoring systems, such as domestic burglar alarms and the like, peripherals such as glass-break detectors, movement sensors, door/window sensors, video cameras, and microphones, are preferably battery-powered so they can be situated wherever is most appropriate or most convenient without the need to run an electrical supply line. A problem with battery power is that, unlike "mains" electricity, the amount of power available is limited - so that eventually the batteries need to be replaced before they are completely exhausted, to avoid the peripheral from ceasing to operate. Obviously, the proper operation of a security monitoring system is critically dependent upon the proper functioning of the various peripherals of the system.

For one and the same peripheral, there can be different use cases. Assuming that the peripheral is a camera, it can be used within a building to capture images or videos, occasionally, when activated (for example, as the result of being triggered by a motion detector, such as a PIR, or detection of the opening of a door or window), the camera can be installed outdoors and capture images or videos, again occasionally, when activated (for example, as the result of being triggered by a motion detector, such as a PIR, or detection of the opening of a gate), or it can be installed, indoors or outdoors, as a surveillance camera which is continuously active. Such different use cases may require different power options, possibly requiring the use of different types of power pack..

The continuous or substantially continuous activity of a camera peripheral when used for surveillance involves streaming individual images or video to the central unit or some other recipient, and is likely, particularly when the streaming is done wirelessly, to involve the consumption of a significant amount of power. For convenience, therefore, camera peripherals used in this way will generally be provided with a connection to a mains power supply - so that for these applications a mains connection is typically used in place of a battery power pack.

For security monitoring and alarm systems, particular when installed to protect domestic or small-business premises, camera peripherals are more usually installed to capture images only when triggered, rather than continuously. In such applications, it is generally preferred to use battery rather than mains power, but it can then be a problem to achieve a satisfactorily long battery life. The desires to have compact peripherals, that don't weigh too much, together with the desire to reduce battery cost all push towards constraining the physical size of the battery, but the desire for a battery life of several years, preferably as much as 5 years, encourages the use of batteries with higher charge capacity. At the design stage, decisions are made about the energy storage capacity required of a battery pack to achieve a desired minimum battery life, suitable battery chemistries, and in turn the size of the battery compartment needed to house the battery pack.

Of course the battery life actually achieved with any peripheral depends significantly on the peripheral's duty cycle - in the case of a camera, how often the peripheral is activated to capture images and to send them to the central unit of an alarm or monitoring system. For many installations, where a camera is unlikely to be triggered except in the event of an intrusion, it may be possible to achieve the target battery lifetime with a set of disposable batteries such as lithium ion batteries (for example, a set of lithium ion AA batteries). Whereas, in some other installations a camera peripheral may be expected to be triggered much more frequently, so that an acceptable battery lifetime is unlikely to be achieved using a similar set of batteries. In such a situation, it may just be accepted that the battery pack will need to be changed more frequently - and, in that case, rechargeable batteries used instead of disposable batteries, battery packs being swapped and recharged periodically.

It is also known to use solar cells to supply current to externally mounted video cameras, but this necessitates the installation of yet another component, thereby increasing the cost of installation.

These and other problems from the use of battery power supplies arise not only in the domain of security monitoring systems, but much more generally.

There therefore exists a need to improve achievable battery lifetime with battery powered devices.

The present invention seeks to address one or more of these problems.

### Summary

Consequently, in a first aspect the invention provides a peripheral for an alarm system installation, the peripheral comprising a battery housing adapted to house a rechargeable battery, the peripheral comprising a first electrical interface to connect with, and draw current from a first interface of the rechargeable battery when installed in the peripheral, the peripheral further comprising: a cover for the battery housing, the cover being configured for releasable attachment to the peripheral to close the battery housing to enclose a rechargeable battery within the housing, the cover having: on an outer surface, a photovoltaic arrangement; on an inner surface a charging interface to couple with, and provide electrical current to a second corresponding interface of the rechargeable battery; the photovoltaic arrangement being electrically coupled to the charging interface, so that in use the photovoltaic arrangement is able to supply electrical current to the rechargeable battery within the battery housing.

The battery may be integrated into the battery housing, rather than being in the form of a battery pack that is readily interchangeable. With such an arrangement, the first electrical interface of the peripheral may be directly connected to the first interface of the rechargeable battery: for example, the rechargeable battery may connect directly to electrical circuitry of the peripheral - without the use of a readily demountable connection arrangement. This may enable a more compact configuration and, providing that the service life of the rechargeable battery is sufficiently long, may not compromise the effective lifetime of the peripheral.

In a second aspect the invention provides a peripheral for an alarm system installation, the peripheral comprising a battery housing adapted to receive a rechargeable battery pack, the peripheral comprising a first electrical interface adapted to connect with, and draw current from a first corresponding interface of the rechargeable battery pack when installed in the peripheral, the peripheral further comprising: a cover for the battery housing, the cover being configured for releasable attachment to the peripheral to close the battery housing to enclose a rechargeable battery pack within the housing, the cover having: on an outer surface, a photovoltaic arrangement;-on an inner surface a charging interface to couple with, and provide electrical current to a second corresponding interface of the rechargeable battery pack;-the photovoltaic arrangement being electrically coupled to the charging interface, so that in use the photovoltaic arrangement is able to supply electrical current to the rechargeable battery pack within the battery housing.

In this way, the effective lifetime of a battery pack of a peripheral can be increased, even when the photovoltaic arrangement may be unable to supply sufficient current to fully power the peripheral. For example, the peripheral may include a first radio transceiver, that consumes little power, for periodic communication of control signals and the like with a central unit of the alarm system installation, and a second radio transceiver for transmitting data, such as images or video signals, that consumes significantly more power: the first radio transceiver may be an 868MHz ISM device, and the second transceiver may be a Wi-Fi transceiver. The photovoltaic arrangement may provide sufficient power to be able to satisfy the energy demands of the first radio transceiver in communicating with the central unit, but may not provide sufficient power to be able to satisfy the energy demands of the second radio transceiver when transmitting video files or video streams via Wi-Fi, for example.

The peripheral as such remains unchanged whether or not the photovoltaic cover is used. Likewise, the same rechargeable battery packs may be used with or without the photovoltaic cover. Thus, fewer individual versions of one and the same device, and fewer individual versions of battery packs, have to be manufactured, resulting in cost and efficiency savings.

The same peripheral may also be used with other battery pack types, for example including non-rechargeable cells. As an alternative to a battery pack, a-mains powered power pack may be provided to fit in place of a battery pack.-Preferably, each power-pack has an identifier or identification that is readable by a processor of the peripheral. The identifier makes available to the peripheral the information which is required by the peripheral to determine which type of power-pack is being used. This allows the peripheral or the central unit to determine, for example, the remaining time of operation under battery power and to undertake performance related energy management activities. For doing so, it is necessary to know which power-pack is inserted, and whether the power-pack is being recharged or not. For example, if the processor or microcontroller of the peripheral, that may be detachably connected to a charger, receives information from the power-pack that a charger is connected, then the peripheral may be configured to act like a mains powered device. Alternatively if the connection to the charger is removed then battery saving behaviours may be initiated. For example, where the peripheral is a camera it may take and transmit to the central unit lower resolution images, and videos at lower frame rates, than would be the case when behaving as a mains powered device.

The identifier can be implemented as at least one ID pin which cooperates with the peripheral. In one embodiment, the ID pin is mechanically coded. This allows a user to provide to the peripheral the information if alkaline batteries or rechargeable batteries are provided in the battery housing. According to an alternative embodiment, the identification means is at least one electrical contact, for example an earth. In other embodiments an EEPROM, a resistor, or an active device may be used to allow the type of power-pack to be identified. It is also possible that the identification means comprises a data bus such as i2c thereby allowing the type of the power-pack installed as well as other information to be made available to the peripheral.

In any of the embodiments of the invention, the peripheral may comprise a tamper switch. The tamper switch allows a tamper signal to be sent from the peripheral to the central unit in the event that there is an unauthorized attempt to remove the power-pack. Preferably the tamper is detected by the peripheral, as opposed to through the battery interface. In other embodiments the tamper is detected through the battery interface.

Preferably, the tamper switch cooperates with the power-pack, so that a tamper signal is sent when the power-pack (such as the rechargeable battery or battery pack) is removed or partially removed from the peripheral without there being a prior authorization signal.

It is also possible that a latching arrangement is provided for connecting the power-pack to the peripheral, the tamper switch cooperating with the latching arrangement. The tamper switch allows a tamper signal to be sent when there is an unauthorized attempt to unlatch the power-pack.

Optionally the power-pack, when installed in the peripheral, forms part of the outer housing of the device.

The peripheral can in particular be a camera which captures images or videos when activated.

In a third aspect, the invention provides a cover for a battery housing of an electronic device, the cover being configured for releasable attachment to the device to close the battery housing to enclose a rechargeable battery pack within the housing, the cover comprising: an inner surface/side which, in use faces the battery pack within the housing; an outer surface; a photovoltaic arrangement on the outer surface; a charging interface on the inner surface to couple with a charging input of the rechargeable battery pack; the photovoltaic arrangement being electrically coupled to the charging interface, so that in use the photovoltaic arrangement is able to supply electrical current to a rechargeable battery pack within the battery housing. By integrating a photovoltaic arrangement into the cover of a battery housing of a device, it is possible to supplement the charge stored in the rechargeable battery pack, thereby extending the useful life of a charged battery pack.

Current supplied by the photovoltaic arrangement may be sufficient to compensate for energy used during normal operation of a device - for example, for a camera peripheral of a security monitoring system, the current supplied may be enough to compensate, or largely to compensate for the energy used for periodic radio checks with the central unit of the security monitoring system, thereby leaving more energy to be used to handle alarm events and the streaming of images or videos over a wireless link.

The aspect of the invention that concern covers for battery housings evidently have application far beyond the field of security monitoring or alarm systems.

In any of the first through third aspects, the charging interface may comprise a male connector for insertion into a corresponding female connector of the rechargeable battery (pack). This has the benefit that the same battery pack could be used whether or not the cover including a photovoltaic arrangement is used.

In an alternative arrangement, suitable for use with the second or third aspects, the battery pack may be wired directly to electronics that adapt an output of the photovoltaic arrangement to a suitable form for supply to the rechargeable battery pack, or even directly to the photovoltaic arrangement if the output of the arrangement is suitable for direct connection to the rechargeable battery.

In a fourth aspect, there is provided a peripheral for an alarm system installation, the peripheral comprising a battery housing adapted to house a rechargeable battery, the peripheral further comprising: -a cover for the battery housing, the cover being configured for releasable attachment to the peripheral to close the battery housing to enclose a rechargeable battery within the housing, the cover having: on an outer surface, a photovoltaic arrangement, and on an inner part a rechargeable battery; -the photovoltaic arrangement being electrically coupled to a charging interface of the rechargeable battery, so that in use the photovoltaic arrangement is able to supply electrical current to the rechargeable battery within the battery housing;-the rechargeable battery including a first electrical interface to connect with, and supply current to a corresponding first interface of the peripheral when the cover is coupled to the peripheral.

In a fifth aspect, there is provided a cover for a battery housing of an electronic device, the cover being configured for releasable attachment to the device to close the battery housing to enclose a rechargeable battery within the housing, the cover comprising: an outer surface; a photovoltaic arrangement on the outer surface; a rechargeable battery on an inner side of the cover; a charging interface coupled with a charging input of the rechargeable battery; the photovoltaic arrangement being electrically coupled to the charging interface, so that in use the photovoltaic arrangement is able to supply electrical current to a rechargeable battery pack within the battery housing; the rechargeable battery including a first electrical interface to connect with, and supply current to a corresponding first interface of the peripheral when the cover is coupled to the peripheral.

In a sixth aspect, there is provided a cover for a battery housing of an electronic device, the cover being configured for releasable attachment to the device to close the battery housing to enclose a rechargeable battery within the housing, the cover comprising: an outer surface; a photovoltaic arrangement on the outer surface; a rechargeable battery integrated into the cover; a charging interface coupled with a charging input of the rechargeable battery; the photovoltaic arrangement being electrically coupled to the charging interface, so that in use the photovoltaic arrangement is able to supply electrical current to a rechargeable battery pack within the battery housing; the rechargeable battery including a first electrical interface to connect with, and supply current to a corresponding first interface of the peripheral when the cover is coupled to the peripheral.

In any of the first through sixth aspects, the cover may further comprise electronics to adapt an output of the photovoltaic arrangement to a suitable form for supply to the rechargeable battery pack. The electronics configured to adapt an output of the photovoltaic may comprise a voltage converter.

In any of the first through sixth aspects, the outer surface is preferably convex.

Optionally, the cover is in the form of a hemicylinder.

In any of the first through third aspects, optionally, in use, a rechargeable battery (pack) within the battery housing is at least partly received within the cover.

In any of the first through sixth aspects, the photovoltaic arrangement is optionally flexible. In an alternative configuration, the photovoltaic arrangement may be inflexible but may still be arranged to conform to the exterior form of the peripheral.

Optionally, the photovoltaic arrangement is substantially planar.

In any of the first through sixth aspects, the photovoltaic arrangement is preferably an organic photovoltaic.

In a seventh aspect, there is provided, in combination, a cover for a battery housing of an electronic device, according to any variant of the third aspect, and a rechargeable battery for the electronic device. Optionally. the rechargeable battery is integrated into the battery housing.

The invention will now be described, by way of example only, with reference to the accompanying drawings, in which:
Figure 1 schematically shows a security monitoring system including a peripheral and a central unit;
Figure 2 schematically shows a peripheral of a security monitoring system;
Figure 3A schematically shows in front elevation a peripheral, in the form of a camera, for an alarm system;
Figure 3B schematically shows a cross section of the peripheral along the line A-A of Figure 3A;
Figure 4A and 4B shows schematically an interior view of a battery housing cover with a rechargeable battery pack to be accommodated in the housing;
Figure 5 shows schematically another interior view of a battery housing cover with a rechargeable battery pack to be accommodated in the housing;
Figure 6 shows schematically elements of a battery housing cover including a photovoltaic arrangement;
Figure 7 shows schematically a cross section corresponding to that of Figure 3B but with a more extensive photovoltaic arrangement; and
Figure 8 shows schematically, in simplified form, a possible configuration of a video peripheral according to an aspect of the invention.

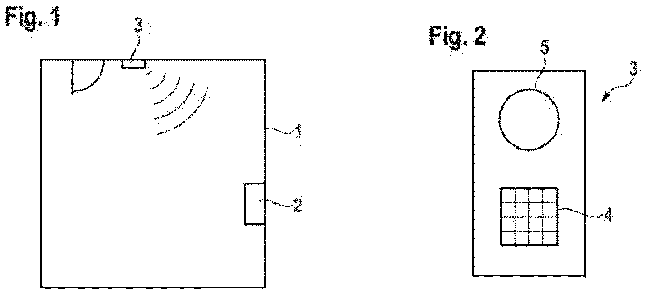

Figure 1 shows a security monitoring or alarm system installation in a building 1. The home alarm system installation comprises a central unit 2 which is typically mains-powered and serves for external communication, e.g. for sending an alarm call to an operation centre, and optionally to stream video or otherwise supply images from a camera of the installation. Other functionality can be implemented as well.

The alarm system installation further comprises one or more peripherals. The peripherals communicate with the central unit and can be provided with electrical energy in different manners, depending upon the use case.

One example of such peripheral is a camera 3, shown in Figure 2, which can capture sound via a microphone 4 and images including optionally video images via a lens 5.

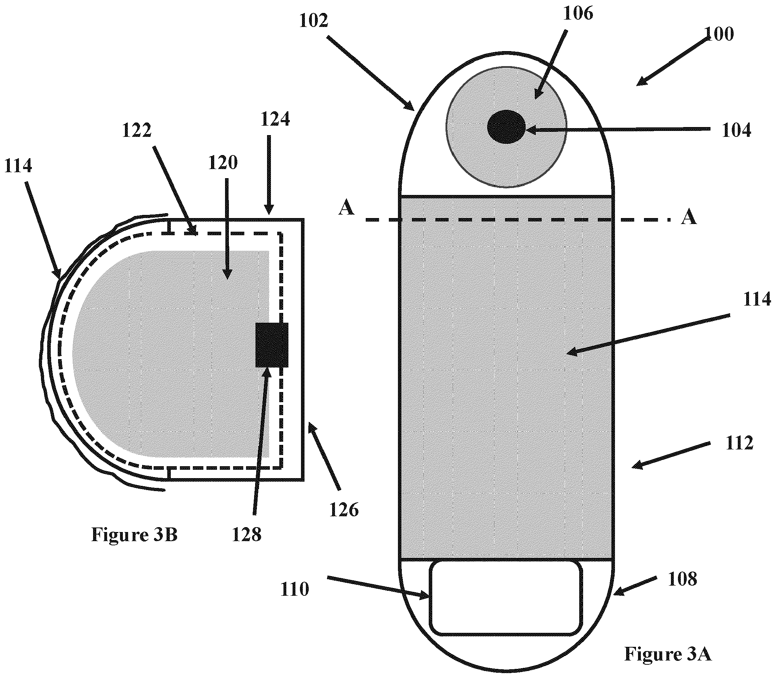

Figure 3 shows an example of a peripheral 100 for an alarm system, in this case a camera, in front elevation (Fig 3A), and as a cross-section (Fig. 3B). An upper portion 102 of the peripheral includes a camera lens 104 that directs light onto a camera sensor, not shown, inside the upper portion of the camera. The lens is at the centre of a concavity 106 so shaped as to enable the lens 104 to provide the camera sensor with a wide-angle view at least both vertically and laterally. A lower portion 108 of the peripheral optionally includes a movement sensor 110, for example in the form of a PIR, that is coupled to a processor, not shown, of the peripheral, that is in turn coupled to the camera sensor. Alternatively, the camera peripheral may be used in conjunction with a separate movement sensor (e.g. PIR) or another device configured to trigger activation of the camera based on detection of an event e.g. such as the opening of a door, captured by a door sensor).

Between the upper and lower portions of the peripheral is a battery housing cover 112, having on (more generally, supported by) its outer or exterior surface a photovoltaic arrangement 114 such as a photovoltaic source based on an organic PV. The outer surface of the cover is convex, as can more clearly be seen from the outline of the cross-section shown in figure 3B. This cross-section represents schematically the arrangement viewed along the line A-A in figure 3A.

By giving the cover a convex, e.g. hemicylindrical, shape, the photovoltaic arrangement may more effectively gather sunlight - even when mounted on (in the Northern Hemisphere) a North-facing wall, than would a flat panel photovoltaic. In this way, the photovoltaic cover may provide power more reliably than would be the case with a poorly aligned flat panel arrangement. The curved shape of the photovoltaic, which may adhere closely to the cover, is also less likely to act like a sail when caught by the wind, shedding the wind rather than generating force likely to disturb anti tamper sensors within the peripheral or, in a worst case scenario, to rip the camera from whatever it is mounted on).

In an alternative configuration, the photovoltaic arrangement may be provided in the form of a flat panel, rather than as one that wraps around the body of the peripheral. For example, the battery housing cover may include a an external face upon which is affixed a planar photovoltaic arrangement. With such an arrangement care is preferably taken when installing the peripheral to ensure that the photovoltaic arrangement is so arranged that it is in use sufficiently exposed to the sun or other relevant light source to be able to generate a useful amount of power.

Preferably, the photovoltaic arrangement 114 produces in the region of 75-150 mW under conditions of bright sunlight, for example in the range 80 to 120mW, possibly 80 to 100mW.

Figure 3B shows rechargeable battery pack 120 located within a battery housing whose inner perimeter 122, is shown in broken line. The inner perimeter 122 of the battery housing is defined in part by a body portion 124 of the peripheral, the body portion 124 having a rear face 126 which in use is secured in contact with a mounting surface such as a wall of the premises being protected. The rest of the inner perimeter 122 of the battery housing is defined by an inner surface of the battery housing cover 112. The battery housing cover 112 is configured for releasable attachment to the peripheral, being secured to the body portion 124 through, for example, cooperating engagement portions to define a substantially closed battery housing. Preferably, as will be described below, an anti-tamper arrangement is provided to trigger the sending of an alarm signal to the central unit of the security monitoring system in the event that anyone attempts to remove the battery housing cover, or the battery, without this previously having been notified to the central unit (or under some circumstances the system disarmed).

The rechargeable battery pack 120 may, where the peripheral is a video camera, have a capacity of 30 to 50Wh, for example between 35 and 45Wh, and optionally between 40 and 45 Wh. For other applications, the battery capacity will often be smaller, and yet other applications may use battery packs of greater capacity.
In figure 3B the photovoltaic arrangement is shown very schematically as a wavy line 114, although in practice the photovoltaic arrangement adheres closely to the outer surface of the cover 112 and presents a substantially smooth outer surface. Details of the attachment of the photovoltaic arrangement to the cover will be provided later. Also shown in figure 1B is a first electrical interface 128 which is part of the peripheral adapted to connect with, and draw current from a corresponding 114 interface on the rechargeable battery pack 120. Not shown in figure 1B are any conductors extending from the movement sensor 110 in the lower portion 108, or from the camera sensor in the upper portion, for from the processor, for reasons of clarity and ease of illustration.

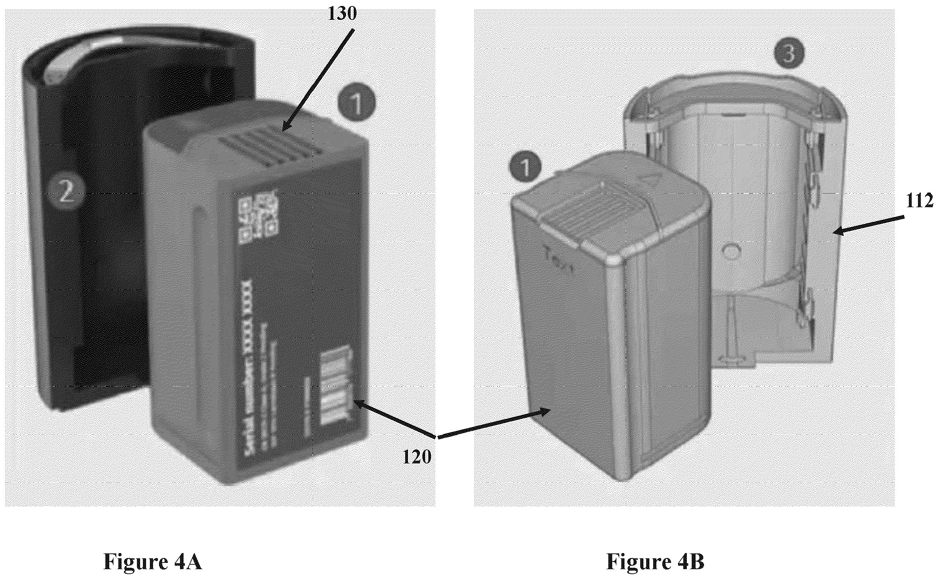

Figure 4A and 4B show different views of a rechargeable battery pack 120 and a battery housing cover 112. Clearly visible in figure 4A and 4B are the electrical contacts 130 that provide the battery pack's first corresponding interface (using the language of claim 1) through which the first electrical interface 128 of the peripheral draws current. As can be seen, the individual electrical contacts, of which five are shown, are elongate in form to provide an extended contact surface to cooperate with corresponding sprung contacts of the first electrical interface. This arrangement may be part of an anti-tamper feature which helps to delay electrical disconnection of the circuitry of the peripheral when the battery pack is removed. Also shown are two optional visible status indicators, one 132 green to indicate a high state of charge, and one 134 red to indicate a low state of charge.

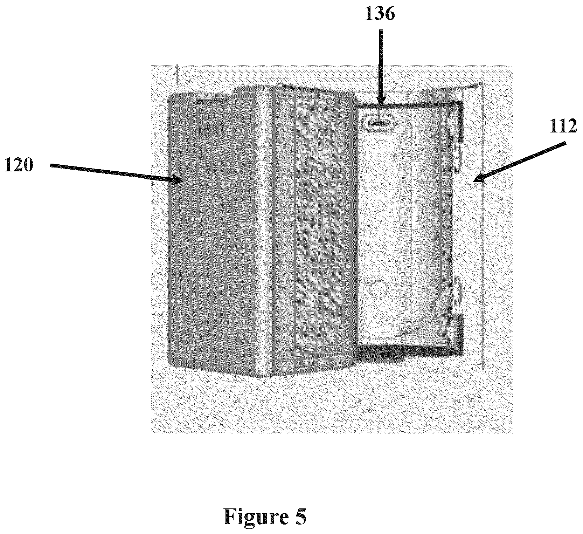

Figure 5 is another internal view of the battery housing cover 112, and the battery pack 120, in which the battery housing cover's charging interface 136, which in use couples with an provides electrical current to a second corresponding interface on the rechargeable battery pack, is clearly visible. In the example shown, the charging interface 136 is in the form of a male micro USB plug, to mate with a corresponding socket in the rechargeable battery pack, although it will be appreciated that other types of interface, and in particular other plug/socket combinations may be provided where appropriate.

Between the photovoltaic arrangement 114 and the battery housing cover's charging interface 136 electronics may be provided to adapt an output of the photovoltaic arrangement to a suitable form for supply to the rechargeable battery pack. The electronics to adapt an output of the photovoltaic arrangement to a suitable form for supply to the rechargeable battery pack may comprise a voltage converter.

As previously mentioned, the rechargeable battery may, rather than being in the form of a readily interchangeable battery pack as shown in Figures 4 and 5, be integrated into the body of the peripheral - in effect, integrated into the battery housing. This may enable a more compact configuration, by eliminating the requirement to provide a protective outer body as part of the battery pack. The rechargeable cell(s) could simply be hard wired into the peripheral, and an interface provided for connection to a photovoltaic cover.

As a further alternative, a photovoltaic cover may be provided for use in combination with a peripheral having a battery housing configured to receive a replaceable rechargeable battery pack, the photovoltaic cover including a rechargeable battery that is integrated with the cover - rather than being readily separable from the cover. In this case, the unitary rechargeable battery and photovoltaic cover assembly preferably still includes the same form of first electrical interface to connect with, and supply current to a corresponding first interface of the peripheral.

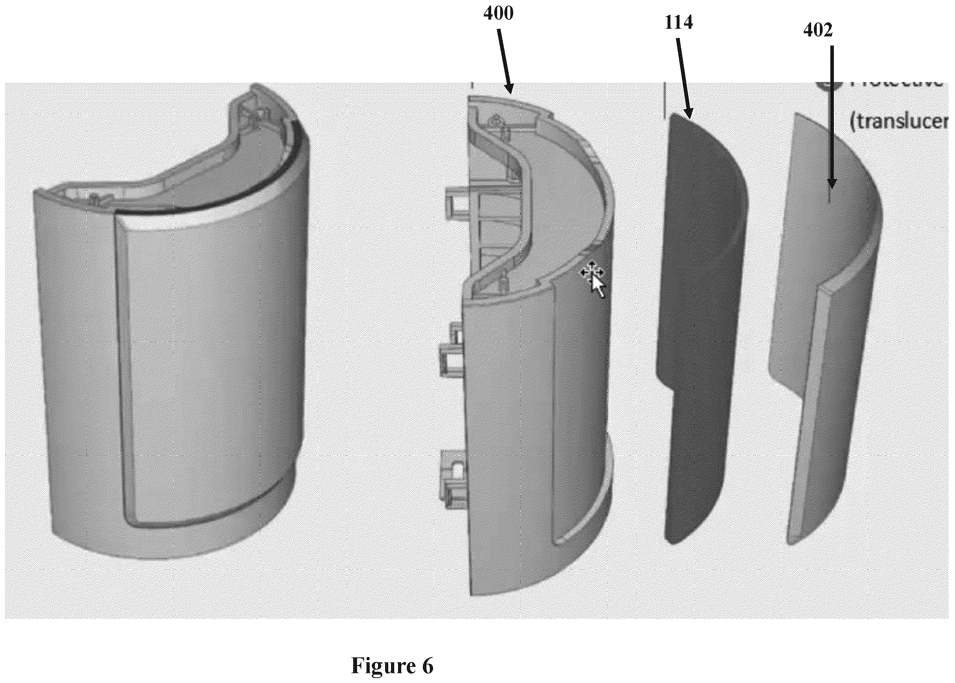

Figure 6 illustrates schematically details of one possible constructional arrangement for mounting the photovoltaic to the battery housing cover. Figure 6A shows the cover in assembled configuration, whereas figure 6B shows individual components, namely the cover body 400, the photovoltaic arrangement 114 and a cover piece 402. The photovoltaic is preferably an organic photovoltaic for easy conformance to the curved outer surface of the cover body 400. The cover piece 402 is provided primarily as protection for the photovoltaic arrangement 114, and may be transparent or translucent. If translucent, the cover piece may be coloured to match the colour of the exterior of the peripheral, so that the presence of the photovoltaic is concealed.

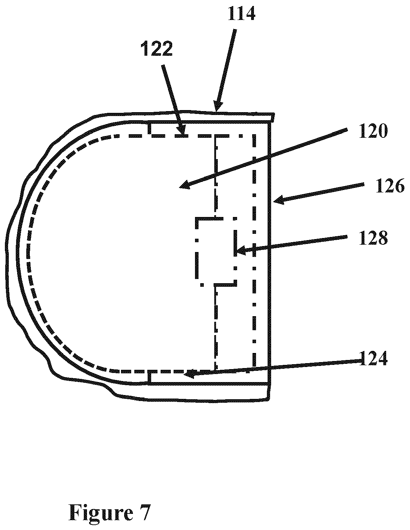

Figure 7 shown schematically a cross-section corresponding to that of figure 3B, but with a more extensive photovoltaic arrangement - in particular one the wraps around the sides of the body of the peripheral. This is an example of how a photovoltaic arrangement of a cover for a battery housing of an electronic device can extend beyond the outline of another cover that has been replaced.

All different types of power-packs may have (at least approximately) the same dimensions and an identical power interface, the power interface of the power-packs cooperating with contacts at the peripheral for providing electric energy.

The cover may have a locking lever for reliably connecting the cover to the housing of peripheral, or closing the cover in relation to the housing of peripheral. On the cover, a tamper tab may be arranged to cooperate with a tamper switch provided in the peripheral. Should the tamper tab be moved in relation to the tamper switch, which would occur for example if the cover were removed or partially withdrawn from the peripheral, without there having been a prior communication to the central unit or other entity that authorizes removal of the cover, a tamper signal is sent from the peripheral to the central unit. Alternatively, the tamper could be triggered where the tamper tab is rotated in relation to the tamper switch.

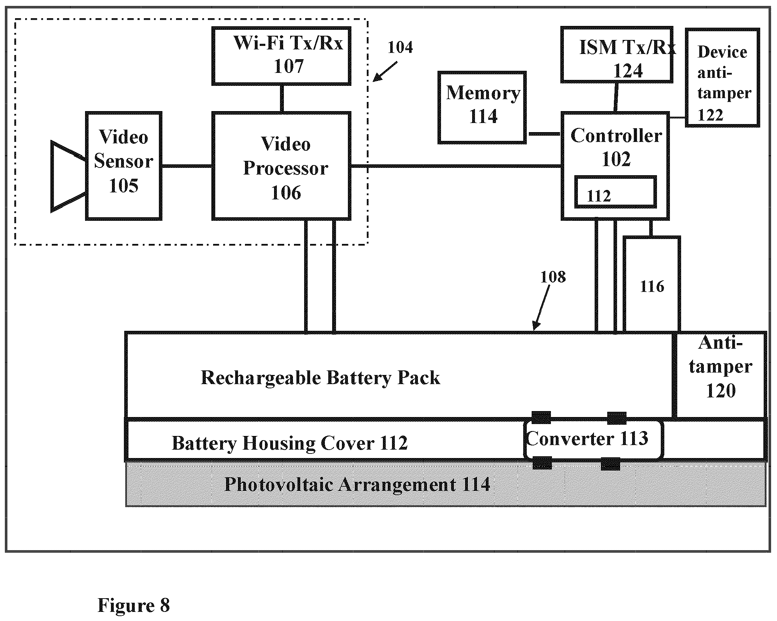

Figure 8 shows schematically a simplified circuit arrangement for a battery-powered electronic device 100. The device comprises a first part, that includes an electronic controller 102 to control the operation of the device, and the second part 104, controlled by the controller 102, which uses battery power only when energised and which is energised only intermittently. The second part 104 of the device has a power consumption that is greater than that of the first part. In the illustrated example the electronic device 100 is a peripheral of a security monitoring system, such as described with reference to Figure 1 and 2, specifically a video camera peripheral. The battery power supply 108 here comprises a rechargeable battery pack. Means 116 are provided for determining whether a connected power-pack is a first-type power pack or a second-type power-pack. Optionally the means includes a selector switch, or an electrical processing arrangement.

Optionally, the battery pack 108 is provided with identification means to enable the controller 102 to identify the battery pack type. Optionally, the identification means is implemented as at least one ID pin, and optionally the ID pin is mechanically coded.

Optionally, the identification means is at least one GPIO contact or comprises a data bus such as i2c

The controller/processor 102 is preferably provided as part of a system on chip (SoC) device such as one of Silicon Labs' EFR32FG13 family of devices, which have a 32-bit Arm processor, sub-GHz radio transceivers, e.g. for ISM 868MHz and other frequencies, and which may be used with 32.xKhz crystal for the RTC.

As can be seen, the second part 104 includes a video sensor 105, which is coupled to a video processor 106 which is in turn coupled to a Wi-Fi transceiver 107. This second part 104 is off, drawing no power from the battery power supply 108, when the peripheral is in standby mode - which is most of the time. Conversely, the first part of the device, which may be considered to be the main part, draws power from the battery power supply 108 all the time, even when the first part is in a sleep state. The second part 104 consumes a lot of energy when it is taking photos, streaming video or sending images over Wi-Fi - for example to the central unit of the security monitoring system. The video processor 106 is an image signal processor (ISP) used for photo capture and controlling the Wi-Fi module 107. A suitable ISP device is the Omnivision OA7000. The Wi-Fi transceiver may conveniently be provided by an RF module such as a Cypress Semiconductor CYW43012, which is an ultra-low-power Wi-Fi and Bluetooth device which is compliant with IEEE 802.1 In.

The photovoltaic arrangement 114, on battery housing cover 112, is coupled to the rechargeable battery pack 108 by means of electronics 113 to adapt the output of the photovoltaic arrangement to a suitable form for supply to the rechargeable battery pack 108. Optionally, electronics to adapt the output of the photovoltaic arrangement to a suitable form for supply to the rechargeable battery pack 108 comprise a voltage converter.

Although in the preceding description we have discussed the use of a photovoltaic arrangement to capture and harness the power of the sun, the reader should understand that under certain circumstances the peripheral may be installed in a location where a light source other than (or additional to) the sun may provide all or a significant amount of the energy harvested by the photovoltaic arrangement. For example, in areas subject to floodlighting - such as sports arenas, storage facilities, warehouses, etc., useful amounts of power may be recovered from artificial light sources.

## Claims

1. A peripheral for an alarm system installation, the peripheral comprising a battery housing adapted to house a rechargeable battery, the peripheral comprising a first electrical interface to connect with, and draw current from a first interface of the rechargeable battery when installed in the peripheral, the peripheral further comprising:
a cover for the battery housing, the cover being configured for releasable attachment to the peripheral to close the battery housing to enclose a rechargeable battery within the housing, the cover having:
on an outer surface, a photovoltaic arrangement;
on an inner surface a charging interface to couple with, and provide electrical current to a second corresponding interface of the rechargeable battery;
the photovoltaic arrangement being electrically coupled to the charging interface, so that in use the photovoltaic arrangement is able to supply electrical current to the rechargeable battery within the battery housing.

2. The peripheral of claim 1, wherein the peripheral further comprises means for determining whether a connected power-pack is a first-type power pack or a second-type power-pack.

3. The peripheral of claim 2 wherein the first electrical interface comprises electrical contacts for ground and power, and an identification means.

4. The peripheral of claim 3 wherein the identification means is implemented as at least one ID pin, and optionally the ID pin is mechanically coded.

5. The peripheral of claim 3 wherein the identification means is at least one GPIO contact or comprises a data bus such as i2c.

6. The peripheral according to any of claims 2 to 5 wherein the peripheral comprises a tamper switch, and optionally:
the tamper switch cooperates with the power-pack; and/or
a latching arrangement is provided for connecting the power-pack to the peripheral, the tamper switch cooperating with the latching arrangement.

7. The peripheral according to any one of the preceding claims wherein the peripheral is a wireless camera, optionally a video camera.

8. The peripheral of claim 1, further comprising a rechargeable battery integrated into the battery housing, the first electrical interface of the peripheral being connected with the first interface of the rechargeable battery.

9. A peripheral for an alarm system installation, the peripheral comprising a battery housing adapted to house a rechargeable battery, the peripheral further comprising:
a cover for the battery housing, the cover being configured for releasable attachment to the peripheral to close the battery housing to enclose a rechargeable battery within the housing, the cover having:
on an outer surface, a photovoltaic arrangement, and on an inner part a rechargeable battery;
the photovoltaic arrangement being electrically coupled to a charging interface of the rechargeable battery, so that in use the photovoltaic arrangement is able to supply electrical current to the rechargeable battery within the battery housing;
the rechargeable battery including a first electrical interface to connect with, and supply current to a corresponding first interface of the peripheral when the cover is coupled to the peripheral.

10. A cover for a battery housing of an electronic device, the cover being configured for releasable attachment to the device to close the battery housing to enclose a rechargeable battery pack within the housing, the cover comprising:
an inner surface/side which, in use faces the battery pack within the housing;
an outer surface;
a photovoltaic arrangement on the outer surface;
a charging interface on the inner surface to couple with a charging input of the rechargeable battery pack;
the photovoltaic arrangement being electrically coupled to the charging interface, so that in use the photovoltaic arrangement is able to supply electrical current to a rechargeable battery pack within the battery housing.

11. A cover for a battery housing of an electronic device, the cover being configured for releasable attachment to the device to close the battery housing to enclose a rechargeable battery within the housing, the cover comprising:
an outer surface;
a photovoltaic arrangement on the outer surface;
a rechargeable battery integrated into the cover;
a charging interface coupled with a charging input of the rechargeable battery;
the photovoltaic arrangement being electrically coupled to the charging interface, so that in use the photovoltaic arrangement is able to supply electrical current to a rechargeable battery pack within the battery housing;
the rechargeable battery including a first electrical interface to connect with, and supply current to a corresponding first interface of the peripheral when the cover is coupled to the peripheral.

12. The peripheral according to any one of claims 1 to 8, or the cover of claim 10, wherein the charging interface comprises a male connector for insertion into a corresponding female connector of the rechargeable battery pack.

13. The peripheral according to any one of claims 1 to 8 or 12, or the cover of any of claims 10 to 12, the cover further comprising electronics to adapt an output of the photovoltaic arrangement to a suitable form for supply to the rechargeable battery pack.

14. The peripheral or cover of claim 13, wherein the electronics to adapt an output of the photovoltaic comprise a voltage converter.

15. The peripheral according to any one of claims 1 to 8, or 12 to 14, or the cover of any one of claims 10 to 14, wherein the outer surface is convex.

16. The alarm peripheral or cover of claim 15, wherein the cover is in the form of a hemicylinder.

17. The peripheral or cover of claim 15 or claim 16, wherein in use a battery pack within the battery housing is at least partly received within the cover.

18. The peripheral or cover of any one of the preceding claims, wherein the photovoltaic arrangement is flexible.

19. In combination, a cover for a battery housing of an electronic device, as claimed in any one of claims 10 to 18, and a rechargeable battery for the electronic device.

20. The combination of claim 19, wherein the rechargeable battery is integrated into the battery housing.
